# EUROPEAN PATENT APPLICATION

(11) **EP 2 363 538 A2**
(43) Date of publication of application: **07.09.2011**
(21) Application number: 11156154.4
(22) Date of filing: 28.02.2011
(51) Int. Cl.: E03C 1/04, F03B 13/00

(54) **Flow sensor for controlling a shower pump**

(30) Priority: 01.03.2010 GB 1003410
(71) Applicant: Gontar, Antoni Harold Nikolas, East Sussex BN24 6JH (GB); Taylor, Frederick James, East Sussex BN20 9JA (GB); Taylor, Jonathan Robert, East Sussex BN20 9JA (GB)
(72) Inventor: Gontar, Antoni Harold Nikolas, Pevensey, East Sussex, BN24 6JH (GB)
(74) Representative: HOFFMANN EITLE

(57) **Abstract**

A flow sensor for controlling a bathroom water pump is disclosed. The flow sensor is for use with a bathroom shower and comprises a turbine for extracting energy from water flowing relative to the sensor, an electrical generator coupled to the turbine, and an RF transmitter electrically connected to the generator. The transmitter is configured to transmit a pre-determined signal to turn on a water pump when the rate of rotation of the turbine exceeds a pre-determined threshold. Such a flow sensor allows the flow sensor to be located in a bathroom environment at a convenient-to-service location while allowing the pump to remain in a separate location and to be actuated contingent on flow of water through the flow sensor. The use of a turbine reduces the likelihood of fouling of the flow sensor by particulate contaminants. The pump may, for example, be a power-shower pump to supply water at enhanced pressure to a shower outlet or may be a waste water gulley pump to extract waste water from a gulley.

## Description

### Field of the Invention

The present invention relates to a flow sensor for controlling a bathroom water pump.

### Background Art

Traditionally, in shower facilities in bathrooms (which in the instant specification includes showers in wet-rooms, showers provided over shower trays, showers provided over baths and similar facilities provided in domestic, recreational and healthcare settings), sufficient water pressure for effective shower experience is usually provided by elevation of a water storage tank relative to the shower outlet so that the increased gravitational potential of the stored water results in a high pressure and high flow rate at the shower outlet.

However, there are many situations where gravity feed alone does not supply sufficient water pressure, for example in flats, building conversions, mobile homes, boats, trains and aircraft. In such situations it is impractical to elevate the storage tank, and accordingly a pump is provided between the storage tank (or other water source) and the shower head. There are generally restrictions on the provision of electrical power to wet environments such as bathrooms, and accordingly the pump itself is often located outside the bathroom, usually near the water storage tank.

In such situations, pump activation is conventionally controlled manually, by a user closing a switch prior to entering the bathroom or operating a suitably insulated and waterproofed switch inside the bathroom itself. This is inconvenient, as the pump may inadvertently be left running. Furthermore, such a situation can often require extensive wiring between the bathroom and the location of the pump, which is impractical in situations where a powered or power-boosted shower is to be retrofitted to an existing shower installation.

In recent times, it has been suggested that the pump can be controlled by a flow switch in line with the pump. Such systems operate on the basis that even when the pump is not active, opening the shower valve in the bathroom (which valve may be, for example, a mixer tap) will cause a small flow of water from the storage tank through the flow switch and inactive pump, which flow is not sufficient for an effective shower but is sufficient to trigger the flow switch at the pump. Triggering of the flow switch then causes the pump to operate, providing the desired flow of water to the shower outlet. When the user wishes the shower to end, the user closes the shower valve, by closing, for example, the mixer tap, and the flow switch detects that water is no longer flowing and deactivates the pump. Thus the shower is provided with a suitable flow of water on demand.

In order to keep wiring runs to a minimum, and due to the above-mentioned restrictions on installation of electrical equipment in bathroom environments, these flow switches are typically located at, or very close to, the pump itself. However, the pump is usually housed together with the water storage tank. Such locations are often difficult to access during maintenance work. A common problem with flow switches is that their working become fouled, blocked or inoperative due to build-up of contaminants in the water supply, including flakes of corrosion, limescale and the like. Over time, such flow switches can suffer fouling of working parts due to particulate debris in the water supply. The usual solution to this problem is to provide a water filter with the flow switch. However, over time, the water filter itself

often becomes clogged, leading to restriction of flow and failure of the flow switch to operate.

Cleaning flow switches installed at the pump usually requires draining the water from the piping local to the pump and carrying out the cleaning, repair or replacement work. Sometimes, the exact location of the flow switch is not adequately recorded, and they can thus present a challenge to relocate. Once located, in the confined and difficult to access spaces usually near the pump or water storage tank, this work is challenging and time consuming to perform.

In addition, when constructing a shower installation or a wet-room, there is a requirement to ensure that all waste liquid, usually being waste water, is swiftly and effectively drained from the wet area during use of the facility. Failure to do so can lead to problems such as flooding, unsafe wet surfaces, and unsanitary conditions. (Hereinbelow, the term "waste water" is to be understood as any waste liquid that may be present in a bathroom environment, including without limitation clean, contaminated or dirty water, and cleaning product solutions, etc.)

In traditional shower construction, these problems are usually solved by providing the shower tray or wet area with a gulley to accept any water provided to the wet area, the gulley having an outlet which is relatively higher than the waste water conduit which connects, for example, to the local sewer. A difference in height is essential if the water is to be successfully removed from the shower tray with the aid of gravity alone.

However, such installations either limit the locations in which the shower or wet-room can be provided and/or require the shower tray or wet-room area to be provided raised from the existing or natural floor surface of the intended location. There are a number of circumstances in which such elevation is undesirable, for example, in conversions of existing properties, in situations where the space intended to be used as a bathroom is provided relatively lower than the local conduit to the sewer system, or in the provision of showers for the elderly, the disabled or the infirm, where there are user-limitations on the height of step which the user is required to make to enter or exit the wet area.

A conventional solution to this problem has been to provide a shower waste gulley connected to a water pump which, on activation of the pump, provides suction to the waste gulley to remove any water which accumulates there. However, such situations are not ideal, since they require manual activation of the pump prior to use of the shower and manual deactivation of the pump after showering has finished. Due to electrical safety requirements, wiring and switches in bathrooms should be kept to a minimum, and accordingly provision of such pump controls is inconvenient for both the designer and the user. Furthermore, there may occur situations wherein the user fails to correctly activate the pump prior to using the showering facility or fails to deactivate the pump once showering is completed. Both of these situations are undesirable since, in the former case, a flooding situation may occur, while in the latter situation, the pump may be left active and unloaded which may lead to excessive power consumption and potentially overheating and premature failure. Modern pumps, particularly, have the potential to be very quiet in operation, and thus it is entirely possible for the user, especially if hard of hearing, to fail to notice the operating state of the pump.

Again, flow switches installed upstream from the shower inlet have been used to activate such pumped waste gulleys, but these are vulnerable to the same blockage, fouling and maintenance issues as discussed above with regard to flow switches for pumped shower systems. Such switches are typically installed in concealed spaces between a water storage tank and the shower facility. In such cases, the flow switch is frequently difficult to relocate and, once located, to access for cleaning, repair or replacement.

### Summary of the Invention

The present invention has been made with the above problems of conventional bathroom water pumps in mind.

In accordance with the present invention, there is provided a flow sensor for a bathroom shower, comprising: a turbine for extracting energy from water flowing relative to the sensor; an electrical generator coupled to the turbine; and an RF transmitter electrically connected to the generator; the transmitter being configured to transmit a pre-determined signal to turn on a water pump when the rate of rotation of the turbine exceeds the pre-determined threshold. Such a flow sensor allows the flow sensor to be located in a bathroom environment at a convenient to service location while allowing a pump to remain in a separate location and to be actuated contingent on flow of water through the flow sensor. The use of a turbine reduces the likelihood of fouling of the flow sensor by particulate contaminants. The pump may, for example, be a power-shower pump to supply water at enhanced pressure to a shower outlet or may be a waste water gulley pump to extract waste water from a gulley.

In an embodiment of the present invention, the generator and the transmitter are enclosed in a waterproof capsule, which can be removed from its position in the water flow path together with the turbine as a single unit. Such an arrangement provides for easy replacement, servicing and cleaning in the event the turbine becomes fouled by contaminants in the water supply.

In accordance with an embodiment of the present invention, the sensor further comprises a rechargeable battery electrically connected to the transmitter and the generator for providing power to the transmitter even when the turbine is not turning. Such an arrangement allows the transmitter to remain in a stand-by state while the shower is not operating and prevents fluctuations in the turbine's operating speed from impacting transmitter performance.

In accordance with an embodiment of the present invention, the sensor is further provided with a shell having an inlet and an outlet and adapted to locate the turbine in the flow path of water flowing from inlet to outlet. Such an arrangement allows the maximum extraction of energy from the flowing water to efficiently power the flow sensor whilst enabling the flow sensor to be easily installed, replaced and retrofitted to existing systems.

In accordance with an embodiment of the present invention, the shell is configured for in-line connection to a bathroom hose fixture. Such an embodiment allows the unit to be easily integrated with an existing bathroom installation without interfering with the overall appearance of the bathroom.

In an embodiment of the present invention, the shell is configured as a shower head. Such an arrangement allows the flow sensor to be integrated into an existing bathroom installation quickly and easily, to be serviced and replaced conveniently.

In accordance with an embodiment of the present invention, the pre-determined signal is a rolling code. Such an embodiment can avoid interference between multiple flow switches in close proximity, for example in a multi-bathroom house, hospital, cruise ship or similar, and can avoid interference between the flow switch and other unrelated wireless devices such as garage door openers and car security systems.

In accordance with an embodiment of the present invention, there is provided a flow sensor, wherein the pre-determined signal is an activation signal for a shower or wet-room gulley pump or for a power shower pump. Such an embodiment is directed to the particular arrangement wherein the flow sensor directly activates either a power shower pump and/or a pumped shower gulley for removal of waste water from the wet area as well as, or as an alternative to, the pumping of water into that space.

### Description of the Drawings

Embodiments of the present invention will now be described, by way of example only, with reference to the accompanying Figures, in which:
Figure 1 shows an embodiment of the present invention in a typical bathroom scenario as applied to a waste water pump;
Figure 2a shows an exploded view of the first embodiment of the present invention;
Figure 2b shows a radial cross-section of the first embodiment of the present invention;
Figure 2c shows an axial cross-section of the first embodiment of the present invention;
Figure 3a shows a second embodiment of the present invention;
Figure 3b shows a partially disassembled view of the second embodiment of the present invention;
Figure 3c shows a further disassembled view of the second embodiment of the present invention;
Figure 4 shows a typical domestic shower water supply arrangement incorporating the first embodiment of the present invention as applied to a power shower pump.

### Detailed Description

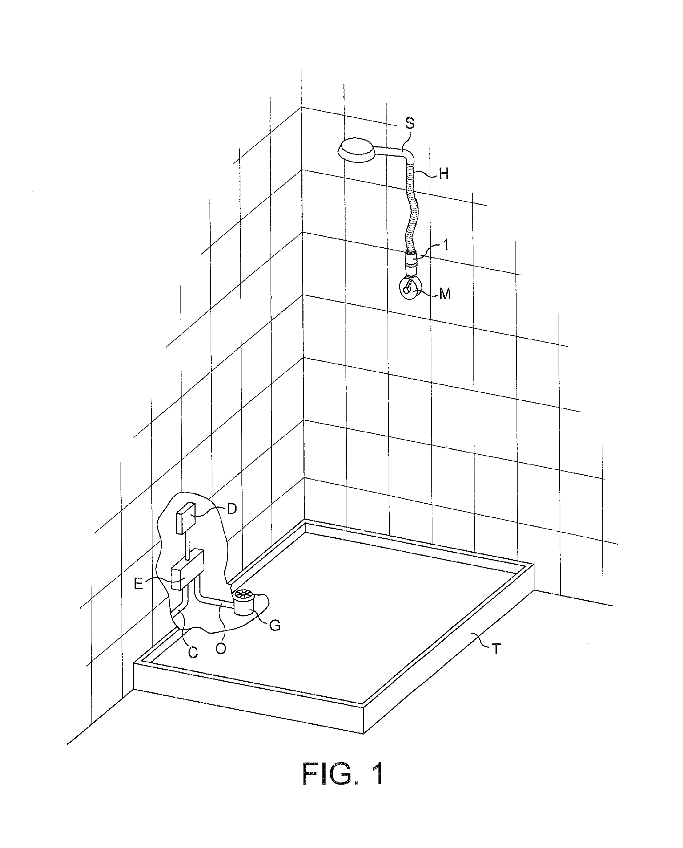

Figure 1 shows a flow sensor 1, being an embodiment of the present invention, in a typical installation environment in a bathroom.

The flow sensor 1 is located in-line between a mixer tap M and a shower hose H which is connected to a shower head S. Beneath the shower head S is a shower tray T to catch water emitted from the shower head S and a shower gulley G to remove waste liquid from the shower tray T. An optional power shower pump (not shown in Figure 1) may be provided to enhance the pressure of the flow of water to the mixer unit M and ultimately to the shower head S. Of course, an equivalent arrangement is possible with, for example, an electric shower unit rather than a mixer unit.

Waste water pump E is provided for applying suction to the outlet of the gulley G, so as to draw waste water from the gulley by means of an outlet hose O and pass the waste water downstream to a conduit C connected to a sewer or other waste handling system.

As will be described in detail below, the flow sensor 1 is able to facilitate activation of the pump E by outputting a control signal in dependence upon the presence of a flow of water through the flow sensor 1. Thus, when water is provided to shower outlet S, by activating mixer valve M, the flow of water is detected by flow sensor 1, which then generates a control signal so that pump E is activated and the water falling into the gulley G is swiftly drawn away by pump E applying suction to gulley G. When mixer valve M is closed, water supply ceases and this is detected by flow sensor 1 which stops sending the control signal, thereby causing pump E to be correspondingly deactivated. In the present embodiment, the pump E contains the receiver for the flow sensor signal internally. Alternative configurations may provide an external receiver device electrically connected to appropriate pump control inputs or to the distribution power supply D to the pump E. In the first alterntive, the receiver may be arranged to receive the control signal and to send a command signal to the pump E, causing it to operate. In the second alternative, the receiver may be arranged to receive the control signal and to permit or prevent the flow of power to the pump; for example by changing the operating state of a supply relay.

The irregular line in Figure 1, passing through the cut-out for the gulley G, displays the region underneath the shower tray T and behind the wall where the pump E is located. Distribution power supply D is provided behind the wall for delivering power to the pump. Of course, the pump E may be some distance away, and even provided in another room, for example one which backs onto the shower area, for ease of servicing.

Although Figure 1 shows the flow sensor 1 in the context of a shower head S and a shower tray T, it will be appreciated that the flow sensor 1 may also be installed in other environments such as wet-rooms where the shower tray is absent and the gulley G is provided at a lower point of a waterproofed floor.

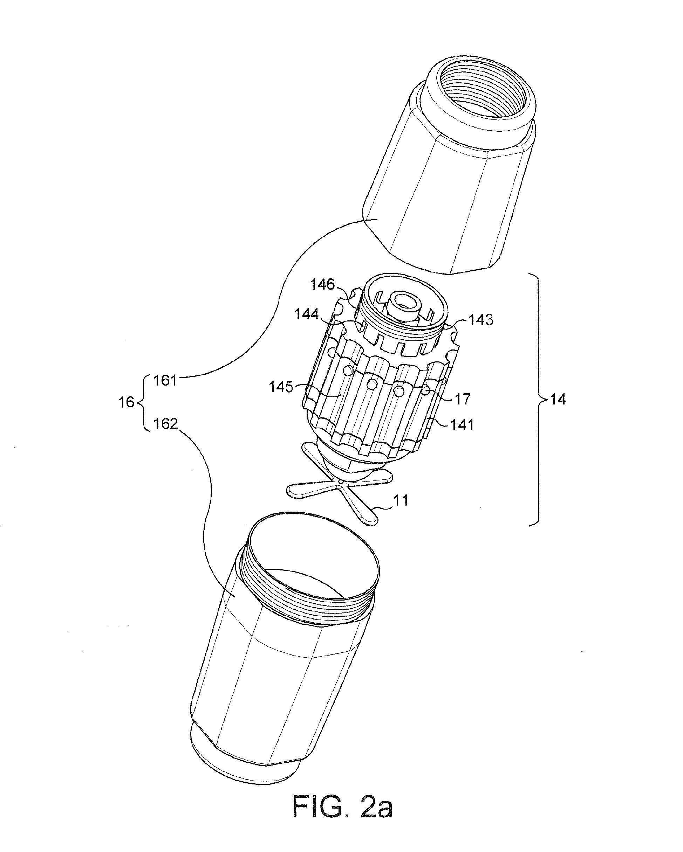

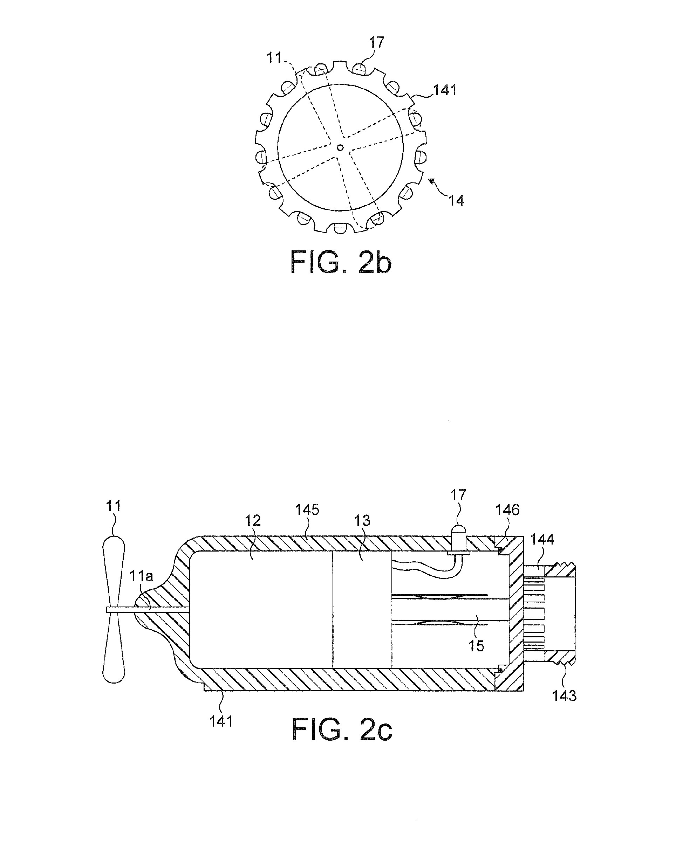

Figures 2a, 2b and 2c show an exploded view, a radial cross-section and an axial cross-section of the first embodiment, respectively. These figures are collectively referred to as Figure 2, since they show the same structure each in a different manner.

With reference to Figure 2, flow sensor 1 includes a turbine 11 and a water-sealed capsule 14, the water-sealed capsule 14 enclosing an electrical generator 12 coupled to the turbine 11 and an RF transmitter 13. As will be described in detail below, when the turbine 11 rotates due to a relative flow of water past the capsule 14, the generator activates the transmitter to send an actuation control signal to the pump E.

The water-sealed capsule 14 is provided as two parts, namely capsule body 145 and capsule cap 146 which fit together to enclose an inner void of the capsule in which the generator 12 and transmitter 13 are provided. The capsule 14 is configured to be disposed within shell 16, which comprises two halves, an upper half 161 and a lower half 162. The capsule cap 146 is provided with a screw thread 143 to engage with the upper half 161 of the shell 16 and to retain the capsule securely therein, centred on the axis of the shell 16 in the direction of water flow.

The shell is further provided with screw threads to couple the upper half 161 and lower half 162 together and two further screw threads to couple the upper half 161 to an upstream location from which water is supplied and the lower half 162 to a downstream location to which water is provided. These threads are configured for engagement with a conventional shower hose fitting, but in other embodiments alternative connectors may be provided, such as press-fit connectors or hose-clamps.

Capsule 14 is provided with apertures 144 and ribs 141 which allow water received at the inlet of upper shell 161 to flow easily past the flow sensor 1, past the turbine 11 and through the outlet of lower shell 162. While it may appear that these ribs define cut-outs which are small in the sectional area compared to the cross-sectional area of the capsule 14, such a configuration nevertheless allows a sufficient quantity of water to pass to both drive turbine 11 and to provide sufficient flow for a shower from the outlet of lower shell 162. The ribs 141 also prevent vortices associated with the turbine 11 from forming around the capsule 14. Such ribs, however, are not essential to the present invention, and a smooth or helical surface may be provided, for example.

LEDs (light emitting diodes) 17 are optionally provided, located in the interstices between ribs 141. In the present embodiment, these LEDs are configured to illuminate when the transmitter 13 is activated, thus confirming that the flow sensor 1 is correctly operating. This is particularly advantageous when the intended user is hard of hearing or otherwise perceptually impaired, or when a low-noise pump is installed. To enable the LEDs to be seen, at least upper shell 161 is provided as a translucent material, preferably a translucent plastic. On the other hand, in embodiments where it is not desired to provide LEDs 17, upper shell 161 and lower shell 162 may be provided either as opaque plastic, stainless steel, or another suitable material. Of course, other illuminable indicators may be used instead of LEDs.

Visible most easily in Figure 2b are capsule 14, ribs 141, LEDs 17 and the position of turbine 11, shown in dotted outline. It can be seen from Figure 2b that, if it is not desired to provide the LEDs 17, the available flow channels between ribs 14 may become wider and an even higher water throughput is possible.

Visible in Figure 2c is the arrangement of the turbine 11 driving the generator 12 via a drive shaft 11a. The generator is electrically connected to transmitter 13 which is also connected to battery 15 and LED 17. The entire construction is enclosed within capsule 14, comprising capsule body 145 and capsule cap 146. A rib 141 is only shown on one side of Figure 2c, since, as can be seen from Figure 2b, in the present embodiment each rib faces a flow channel with an LED in it on the diametrically opposite side. This however, is purely arbitrary, and the number of channels and LEDs may be varied within normal design constraints. Indeed, some of the channels may be provided with LEDs and others without LEDs, as the designer wishes.

Referring to Figure 2c, the operation of the present device will now be explained.

In use, water flows in at the inlet of the capsule and passes through apertures 144 formed in cap 146. The water then flows through the channels formed between the ribs 141 to pass the turbine 11.

The turbine 11 rotates and causes the generator 12 to provide power to the transmitter 13. Once the transmitter 13 is supplied with a sufficiently high voltage from the generator, indicating a sufficient flow of water through the flow sensor, the transmitter transmits a radio frequency signal which is received by the pump E to indicate that the pump should be activated. At the same time, LED 17 is illuminated to indicate that the transmitter is successfully transmitting.

In the present embodiment, while the turbine is turning and the generator is supplying power to the transmitter, the transmitter also recharges rechargeable battery 15. Rechargeable batter 15 may, for example, be a conventional NiMH cell or be a lithium iron or lithium polymer cell. In other embodiments, the battery may be a regular non-rechargeable cell, which the user would replace on a periodic basis. The purpose of the battery is to supply sufficient power to the transmitter to ensure reliable operation even with variations in the flow speed of the water.

However, it is entirely possible to provide variant embodiments without the use of a battery, rechargeable or otherwise. Such a variant embodiment could rely on the flow of water being sufficiently stable to maintain adequate power to the transmitter, or could incorporate a capacitor to smooth the power supply.

In the present embodiment, where a rechargeable battery is provided, a conventionally-obtainable charge controller circuit is incorporated in the transmitter to avoid overcharging of the battery.

The code sent by the transmitter is a sequence of codes forming a rolling code transmitted at a code word rate of ten per second. The code sequence is transmitted for as long as the turbine is rotating at a sufficiently high rate to generate the pre-determined voltage for activation of the transmitter, and the pump is configured to operate for as long as the signal is being received. When the water flow stops, the turbine spins down and the transmitter stops sending the code sequence. The pump then ceases operation, after having failed to receive a pre-determined number of code words. The number of code words required not to be received before the pump terminates is set preferably to be greater than one in order to avoid intermittent operation of the pump due to interference.

The transmitter may alternatively be configured to operate the pump on a variety of different transmission regimes, for example by sending a first signal to the pump to begin pumping and a second signal to the pump to stop pumping. Alternatively, a single continuous or repeating signal at a defined frequency may be used instead of a rolling code sequence to signal the pump that operation should be continued.

It will be well within the ambit of the skilled reader to select from the wide variety of transmitters, receivers, and signalling schemes available for wireless communication, the only requirement being that the transmitter is able to provide a sufficiently powerful signal when powered by the turbine and/or the battery and that the receiver be suitably sensitive to receive the transmission through potentially a number of intervening walls.

A second embodiment of the present invention will now be described.

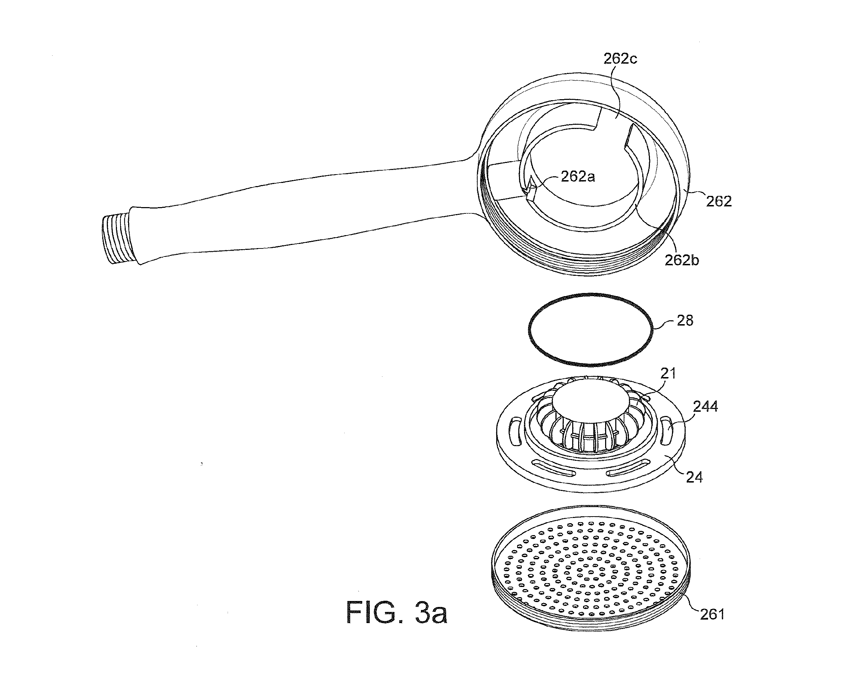

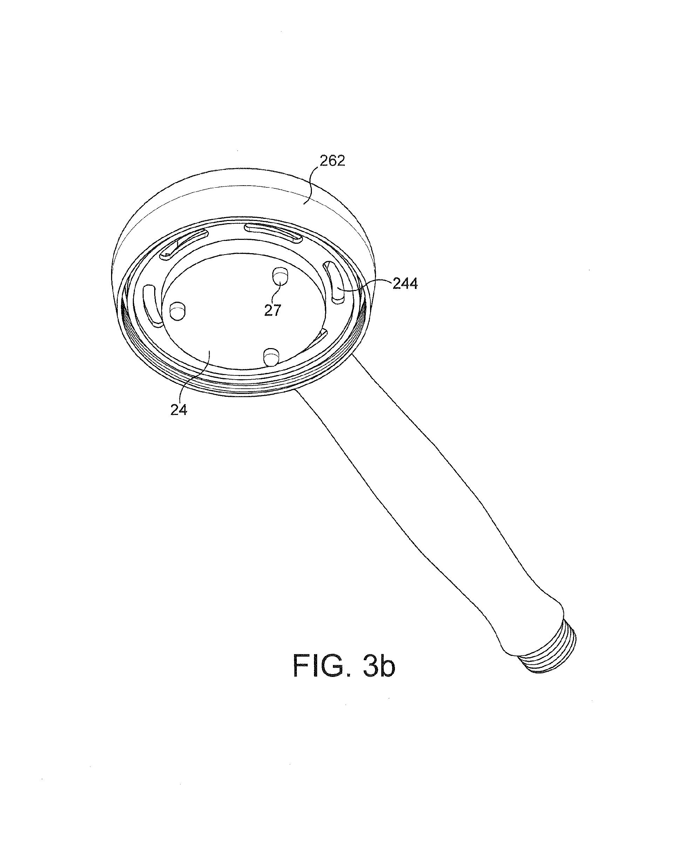

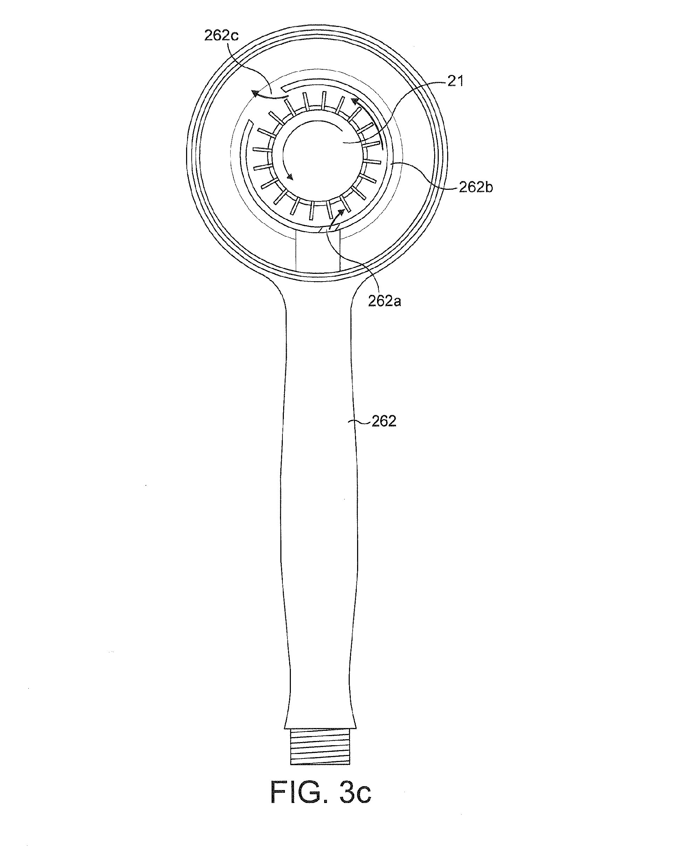

The second embodiment is shown in Figures 3a, 3b and 3c, and is designed to be installed to replace an existing shower head fixture rather than to be in-line between a water supply and a shower hose, as in the first embodiment. Such an embodiment is of particular use when the shower configuration involves a shower head directly installed to an outlet in a ceiling or a wall, in other words when no or little intervening shower hose between wall or ceiling and shower head is available.

Referring to Figure 2, the second embodiment has a shell 262 formed in the shape of a shower head into which an appropriately shaped water-sealed capsule 244 having mounted thereon a turbine 21 is inserted. An 0-ring 28 is provided between the capsule 24 and an inner partition structure 262b of shell 262 which surrounds the turbine 21.

The capsule 24 contains a generator, transmitter and battery (not shown), which operate in the same way as those of the first embodiment. The capsule 24 is again provided with apertures 244 to allow the passage of water after energy has been extracted by the turbine, and there is provided a rose plate 261 which forms a pre-determined pattern of water jets to create the shower effect. The rose plate 261 is provided with a screw thread which engages with the corresponding screw thread on shell 262 to compress and retain the capsule 24 containing the generator and transmitter *in situ.*

A partially assembled view of this second embodiment is shown in Figure 3b, lacking the rose plate 261 but showing LEDs 27 mounted on a downstream surface of capsule 24 to illuminate the interior surface of rose plate 261 when the transmitter transmits a pump control signal, as in the first embodiment. If rose plate 261 is a translucent material, the LEDs will be visible to the user, while if it is an opaque material their effect will be seen in the streams of water exiting rose plate 261.

Figure 3c shows the particular operation of the turbine in the second embodiment of the present invention. Water enters the shower head shaped shell 262 via an upstream threaded connector, normally from a shower hose or a fixed pipe. Water passes the length of the handle of the shower head and exits through entrance aperture 262a to the interior of partition member 262b which surrounds the turbine. The water is forced past the turbine due to the slightly offset position of entrance aperture 262a and exits through exit aperture 262c to the space outside the partition member. The water is then free to exit the shower head via the rose plate 261. Thus, energy is extracted from the water by means of rotation of the turbine 21 sufficient to power the transmitter and, if required, to charge the battery.

The remainder of the details of the second embodiment, including its operation of generating and transmitting a pump control signal are equivalent to those shown in the first embodiment, and accordingly will not be described again here.

All elements of the present embodiment may preferably be constructed from ABS plastic, except for the O-rings which may preferably be constructed from butyl rubber, and the generator, transmitter, battery and LEDs which are preferably provided as conventional electronic commodity components.

As previously noted, the above embodiments of the present invention may be put into effect to cause a power shower pressure booster pump to operate. Such a situation will now be described.

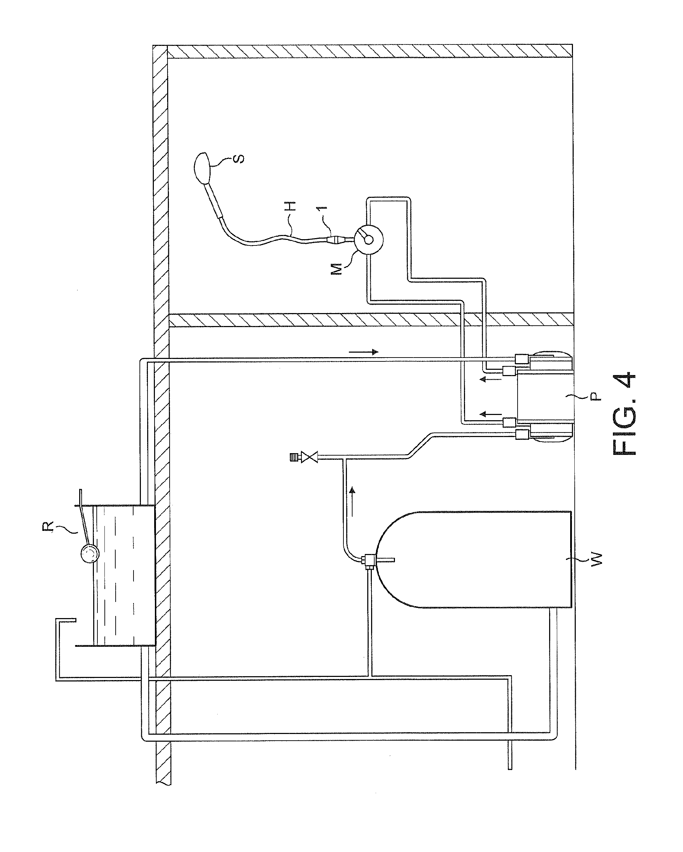

Figure 4 shows the first embodiment of the present invention installed in a water supply system together with a power shower pump P. Water is stored in warm water store W and pressure for the system is supplied in cold water storage reservoir R. Cold water storage reservoir R is fed by a connection to the mains water supply.

When mixer valve M of the shower facility is opened, the pressure from cold water reservoir R is sufficient to drive warm water from the warm water storage tank W through the pump P along hose H and out of shower head S. Alternatively, cold water may be fed directly from the cold water reservoir R through pump P, mixer tap M and to shower head S. After mixer tap M, the mixed water flow flows past the flow sensor 1 which is an embodiment of the invention similar or identical to the first embodiment hereinbefore described. This small flow of water is sufficient to cause the flow sensor 1 to generate a control signal to cause the pump P to activate, and thereby supply the full desired water pressure for an effective shower.

Although the flow sensor 1 in this embodiment is similar or identical to the first embodiment, it will of course be appreciated that instead the flow sensor may be similar or identical to the second embodiment described above with reference to Figures 3a, 3b and 3c.

It must also be noted that in any embodiment, the transmitter may activate simultaneously any other type of bathroom pump which it is prudent to engage during showering activities. For example, the pump E for extracting water from gulley G may be activated in addition to activation of the power shower pump P.

The previously described embodiments are purely exemplary, and it will occur to those skilled in the art to make any desired modifications, adaptations, improvements or equivalents which nevertheless fall within the scope of the claimed invention. Materials may be freely chosen to satisfy design constraints, as can dimensions and details of any specific implementation.

## Claims

1. A flow sensor for a bathroom shower, comprising:
a turbine for extracting energy from water flowing relative to the sensor;
an electrical generator coupled to the turbine; and
an RF transmitter electrically connected to the generator;
the transmitter being configured to transmit a predetermined signal to turn on a water pump when the rate of rotation of the turbine exceeds a predetermined threshold.

2. The sensor of any preceding claim, further comprising a water-sealed capsule enclosing at least the generator and the transmitter.

3. The sensor of any preceding claim, further comprising a rechargeable battery electrically connected to the transmitter and the generator for providing power to the transmitter even when the turbine is not turning.

4. The sensor of any preceding claim, further comprising a shell having an inlet and an outlet and configured to locate the turbine in the flow path of water flowing from inlet to outlet.

5. The sensor of claim 4, wherein the shell is configured for in-line connection to a standardised bathroom hose fixture.

6. The sensor of claim 4, wherein the shell is configured as a shower head.

7. The sensor of any preceding claim, wherein the predetermined signal is a rolling code.

8. The sensor of any preceding claim, wherein the pre-determined signal is an activation signal for a shower or wet-room gulley pump.

9. The sensor of any preceding claim, wherein the pre-determined signal is an activation signal for a power shower pump.
